# EUROPÄISCHE PATENTSCHRIFT

(11) **EP 3 077 694 B1**
(45) Veröffentlichungstag und Bekanntmachung des Hinweises auf die Patenterteilung: **13.01.2021**
(21) Anmeldenummer: 14799163.2
(22) Anmeldetag: 18.11.2014
(51) Int. Cl.: F16D 51/22, F16D 65/22, F16D 65/00, F16D 121/24, F16D 125/40, F16D 125/68

(54) **ELEKTROMOTORISCH BETREIBBARES TROMMELBREMSMODUL**
DRUM BRAKE MODULE WHICH CAN BE OPERATED BY ELECTRIC MOTOR
MODULE DE FREIN À TAMBOUR ENTRAÎNABLE PAR MOTEUR ÉLECTRIQUE

(30) Priorität: 06.12.2013 DE 102013225166; 14.03.2014 DE 102014204769
(43) Veröffentlichungstag der Anmeldung: 12.10.2016
(73) Patentinhaber: Continental Teves AG & Co. OHG, 60488 Frankfurt am Main (DE)
(72) Erfinder: GÄDKE, Martin, 65719 Hofheim/Ts. (DE); BACH, Uwe, 65527 Niedernhausen (DE); BECKER, Stephan, 55576 Badenheim (DE); VAN AKEN, Volker, 61194 Niddatal (DE); VON HAYN, Holger, 61118 Bad Vilbel (DE); HOFFMANN, Jens, 64285 Darmstadt (DE); SEFO, Ahmed, 65931 Frankfurt (DE); RITTER, Wolfgang, 61440 Oberursel/Ts. (DE)
(86) Internationale Anmeldenummer: PCT/EP2014/074836
(87) Internationale Veröffentlichungsnummer: WO 2015/082206

(56) Entgegenhaltungen:
- DE-A1-102004 039 479
- DE-A1-102012 201 579
- US-A1- 2001 004 035
- US-A1- 2002 084 153

## Beschreibung

Die vorliegende Erfindung betrifft ein elektromotorisch betreibbares Trommelbremsmodul für Kraftfahrzeuge mit den Merkmalen vom Oberbegriff vom Patentanspruch 1.

Gattungsgemäße Trommelbremsmodule umfassen einen elektromechanischen Aktuator, der auf einer Außenseite der Ankerplatte befestigt ist, zum Antrieb von einem Rot-Trans-Wandler zur Wandlung einer rotatorischen Antriebsdrehbewegung in eine translatorische Betätigungsbewegung (B) von Bremsschuhen, die auf einer dem Aktuator abgewandten Innenseite der Ankerplatte in einer Bremstrommel angeordnet sind, so dass diese eine Betätigungsbewegung in Richtung Bremstrommel ausführen können, und wobei etwa mittig zwischen den Bremsschuhen eine Hebel-Spreizeinrichtung insbesondere zur Feststellbremsbetätigung vorgesehen ist.

Aus der DE 198 02 082 A1 ist ein vormontiertes Trommelbremsmodul mit einer stromlos hemmenden Spreizhebeleinrichtung (Spreizschloss) einschließlich Spindel-Muttergetriebe auf einer Rückseite einer Ankerplatte zur Applikation bei Feststellbremsanwendungen bekannt. Dabei ist ein Kraftfluss verlustfrei geschlossen indem die Spreizhebeleinrichtung direkt mit dem Elektromotor gekoppelt und an diesem abgestützt ist, und wobei das Getriebe zur Effizienzsteigerung Wälzkörper enthalten kann. Zur Gewährleistung der nötigen Beweglichkeit in Applikation bei Duo-Servo-Bremsen ist die gesamte Aktuatorbaugruppe flexibel an einer Rückseite von einem Abdeckblech der Radbremse gehaltert. Das System ermöglicht spiegelsymmetrisch ausgebildete Bremsschuhe.

Eine elektromechanisch betätigbare Duo-Servo-Trommelbremse, ohne Seilzuganlenkung, ist aus der EP 594 233 B1 bekannt. Dabei ist ein Elektromotor auf einer Rückseite einer Ankerplatte angeordnet. Die Motorachse ist rechtwinklig zu einer Drehachse einer Bremstrommel arrangiert und treibt eine drehbar sowie axial unverschiebbar platzierte Gewindespindel an. Die Gewindespindel ist parallel zur Motorachse in der Bremstrommel vorgesehen, und in einem Gehäuse gelagert. Die Gewindespindel steht mit einem axial verschiebbar sowie unverdrehbar im Gehäuse gelagerten Element in Eingriff, das ein Hebelgetriebe beaufschlagt. Diese Bauart erfordert neben einem vergleichsweise leistungsstark dimensionierten Elektromotor noch weitere, sehr speziell ausgebildete, Bauteile und erlaubt daher keine einfache Variation in einer Großserie.

Bei besonders leistungsfähigen Trommelbremsen vom Feststellbremstyp der Gattung Duo-Servo, dient eine Spreizeinrichtung dazu, einen translatorischen Hub eines Betätigungselements, das beispielsweise vom Fahrzeugführer über einen muskulär betätigten Bremshebel oder elektromechanisch über einen Zentralaktuator (Seilzugaktuator) dem Getriebe aufgeprägt wird, derart umzuwandeln und aufzuteilen, dass zwei Bremsschuhe mit übereinstimmender Kraft relativ zueinander radial auseinander gespreizt werden. In der Folge kommen die beiden Bremsschuhe zwangläufig in Kontakt mit einem Rotor (Bremstrommel) und die Bremskräfte werden dann über einen Abstützbock auf eine fahrzeugfeste Ankerplatte eingeleitet. Dabei ist die Spreizeinrichtung prinzipiell als Hebelgetriebe ausgebildet, und umfasst wenigstens eine starre Federbrücke mit höchster Widerstandfähigkeit zwischen den Bremsschuhen und einen daran angelenkten Betätigungshebel an dem ein Betätigungselement der Aktuatorik angreift. Insbesondere die DE 696 200 C1 und auch die DE 1 022 920 C1 offenbaren einheitlich starre Spreizeinrichtungen welche rein konstruktiv sicherstellen, dass sich das Hebelgetriebe unter den herrschenden Zuspannkräften nicht verbiegen kann. Auch der DE 10 2004 039 479 A1 ist entnehmbar, dass die Spreizeinrichtung/Hebelgetriebe möglichst starr auszubilden ist. Eine elektromechanisch betätigbare Kraftfahrzeugfeststellbremsanlage mit konventionellem Hebelspreizgetriebe in Verbindung mit Zentral- oder Radbremsaktuatorik geht aus der DE 41 29 919 A1 hervor.

Die WO2012/104395 A2 beschreibt ein Trommelbremsmodul mit einem effizienten, fest gelagerten Radbremsaktuator mit integriertem Rot-Trans-Wandler und ohne Spreizschloss. Thermische Längenänderungen einer Trommelbremse können kompensiert werden. Dazu ist ein Betätigungshebel einseitig an einem der Bremsschuhe angelenkt, und wobei dieser Betätigungshebel mit einem Betätigungselement (Seilzug) vom Aktuator gekoppelt ist. Diese Konstruktion erfordert besondere Bremsschuhe.

Aus der WO 2009/030726 A1 ist eine elektronisch-neigungsabhängige Zuspannkrafteinstellung mit einer elektronischen Steuereinheit zwecks Betätigung einer elektromechanischen Duo-Servo-Trommelbremse bekannt. Dabei wird der eingestellte Spreizweg mit einer Wegsensorik durch die Steuereinheit erfasst, und die im Trommelinneren angeordnete Spreizeinrichtung integriert den Rot-Trans-Wandler mit Hilfe einer Gewindemutter-Spindelanordnung sowie einen als Tellerfederpaket ausgebildeten Federkraftspeicher. Dieser Federkraftspeicher erfordert zusätzlichen Einbauraum.

Dokument US2002/0084153 A1 offenbart ein Trommelbremsmodul gemäß dem Oberbegriff des Anspruchs 1.

Die vorliegenden Erfindungen beruhen auf der Aufgabe, ein universelles, effizientes und weiter vereinfachtes Trommelbremsmodul bei günstiger Bauraumausnutzung zur Verfügung zu stellen, welches einfach zu warten ist und kostengünstig und dennoch variabel an die Applikationen und Besonderheiten von den modernen elektromotorischen Radbremsaktuatoren angepasst ist. Die Aufgabe wird erfindungsgemäß mit den Merkmalen der unabhängigen Patentansprüche gelöst. Erfindungsgemäß wird nach der ersten Lösung des Problems erstmals eine neuartige Hebel-Spreizeinrichtung vorgesehen, die gezielt elastisch deformierbar sowie schwimmend zwischen den Bremsschuhen platziert ist und auch ohne elektrische Wegsensorik funktioniert. Demzufolge löst sich die Erfindung von einem Konstruktionsgrundsatz bei den konventionellen Hebel-Spreizschlössern, wonach die Hebelspreizgetriebe prinzipiell unnachgiebig ausgebildet sind. Im Ergebnis können die besonderen thermischen Ausdehnungseffekte einer Duo-Servo-Trommelbremse rein konstruktiv - ohne besondere elektronische Überwachung also stromlos und auch fail-safe - bei geringem Aufwand kompensiert werden. Die Elastizität ist erfindungsgemäß weiterhin von den Komponenten eines Bremsschuhs separiert.

In weiterer Ausgestaltung der Erfindung ist eine Federbrücke oder ein daran angelenkter Betätigungshebel von der Hebel-Spreizeinrichtung definiert elastisch nachgiebig derart ausgebildet, dass diese (r) unter den herrschenden Zuspannkräften definiert federelastisch nachgibt, also in Doppelfunktion als Federkraftspeicher wirksam ist.

In weiterhin besonders vorteilhafter Ausgestaltung der Erfindung ist die elastische Federbrücke/der Betätigungshebel bogenförmig ausgeführt und im elastischen Bereich deformierbar.

Eine nebengeordnete Lösung des Problems besteht im Prinzip darin, dass ein Gehäuse von dem elektromechanischen Trommelbrems-Radbremsaktuator elastisch vorgespannt, sowie um einen vorbestimmten Weg längsverschiebbar, sowie parallel zur Radachse geführt an einem Bremsträger, wie insbesondere an einer Ankerplatte, angeordnet ist. Zwischen Aktuator und Ankerplatte ist wenigstens eine vorgespannte Feder eingespannt, die als Reservoir dient. Zur Parallelführung vom Aktuator dienen radbremsfeste Führungsbolzen die in aktuatorseitig angeordneten Buchsen aufgenommen sind. Eine umgekehrte Anordnung und Kinematik von diesem Führungssystem ist ebenfalls möglich. Anschläge limitieren dabei den maximalen Verschiebungsweg vom Aktuator. Ein besonderer Vorteil dieser Lösung besteht darin, dass eine Beeinflussung der Nachgiebigkeit, zwecks Adaption an den jeweiligen Fahrzeuganwendungsfall, einfach durch Änderung und Einstellung vom Federsystem ermöglicht ist.

Weitere Einzelheiten und Merkmale der beiden Erfindungen gehen aus Unteransprüchen im Zusammenhang mit der Beschreibung anhand der Zeichnung hervor.

In der Zeichnung zeigt:
Fig. 1: die erste Problemlösung schematisch im Prinzip,
Fig. 2: die zweite Problemlösung in einer Ausführungsform,
Fig. 3: Ausführungsform der ersten Problemlösung in Seitenansicht,
Fig. 4: Explosionszeichnung von der Ausführungsform der Spreizeinrichtung nach Fig. 3,
Fig. 5: nur eine Federbrücke aus Fig. 3 + 4 im federelastisch deformierten Zustand,
Fig. 6: die Federbrücke als Blech-Press-Formteil ausgeführt,
Fig. 7: Radbremsaktuator einschließlich Hebel-Spreizeinrichtung im Längsschnitt etwa maßstäblich, und
Fig. 8: Einzelheiten betreffend Einbausituation und Anlenkung der Spreizeinrichtung in perspektivischer Ansicht.

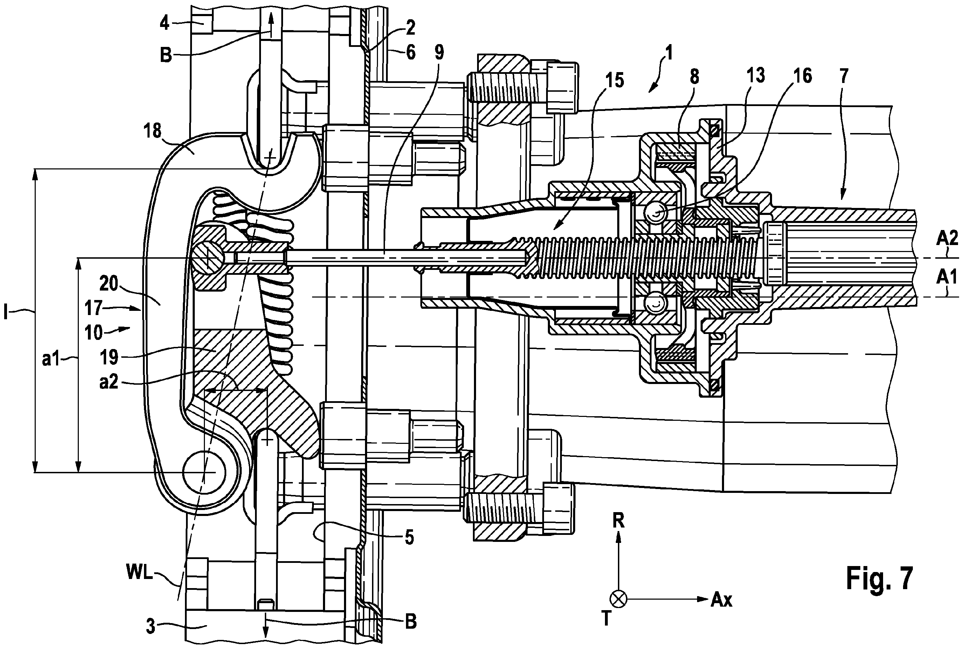

Ein elektromotorisch betätigbares Trommelbremsmodul 1 zur Anordnung an Achsbauteilen eines Kraftfahrzeugs umfasst nach Fig. 7 eine Ankerplatte 2 mit daran bewegbar gelagerten Bremsschuhen 3,4 die innerhalb einer teilweise angedeuteten Bremstrommel 10 auf einer Innenseite 5 der Ankerplatte 2 vorgesehen sind. Auf einer Rückseite/Außenseite 6 der Ankerplatte 2 ist ein elektromotorisch angetriebener Aktuator 7 befestigt, der über ein Getriebe 8 und ein nachgeschaltetes Betätigungselement 9 (Betätigungszug) derart über eine schwimmend eingefügte Hebel-Spreizeinrichtung (Spreizschloss) 10 an den Bremsschuhen 3,4 angreift, dass diese Bremsschuhe 3, 4 eine translatorische Betätigungsbewegung B in Richtung auf die Bremstrommel 11 zu ausführen können, um eine Betriebs- und/oder Feststellbremsfunktion auszuführen. Dabei ist die Spreizeinrichtung 10 etwa mittig auf einer Mittelachse M der Trommelbremse sowie schwimmend zwischen den im Wesentlichen symmetrisch ausgebildeten Bremsschuhen 3,4 platziert. Bei den Duo-Servo-Trommelbremsen ist diametral zu der schwimmend platzierten Spreizeinrichtung 10 auch eine ankerplattenfeste Abstützvorrichtung (sog. Abstützbock) zwischen den Bremsschuhen 3, 4 platziert, die nach dem elektromotorischen Zuspannen und dem anschließenden Servokraftaufbau (der mit dem charakteristischen Eindrehvorgang der Bremstrommel 11 verbunden ist) schließlich final zur Abstützung der Bremskräfte dient. Das Getriebe 12 der elektromechanischen Aktuatorik 7 umfasst ein Getriebegehäuse 13, das einen elektrischen Motor 14 trägt. Der elektrische Motor 14 konsumiert Gleichspannung ist mechanisch oder elektronisch kommutiert, und von einem preiswert verfügbaren Standardtyp. Eine Achse A1 von dem Motor 14 ist im Abstand x sowie parallel zu einer Achse A2 einer Spindel-Mutteranordnung 15 arrangiert. Allen Ausführungsformen oder Lösungen ist gemeinsam, dass zwischen Aktuator 7 und Ankerplatte 2 ein zwischengeschalteter Halter vorgesehen sein kann, um eine einfache Anpassung und Adaption an unterschiedliche Raum- und Einbauverhältnisse in einem Kraftfahrzeug zu ermöglichen. Der Halter ist einstückiger Bestandteil vom Getriebegehäuse 13, oder ein gesondertes Bauteil. Eine weitere Besonderheit sämtlicher Lösungen besteht darin, dass der Aktuator 7 entgegen der Vorwärts-Fahrtrichtung eines Fahrzeugs, also bezogen auf die Vorwärts-Fahrtrichtung vorzugsweise hinter einer Radnabe, etwa in 3-Uhr Stellung bezogen auf die Radnabe, sowie dicht an der Ankerplatte 2 angeordnet ist. Dadurch ergibt sich ein besonders guter Schutz des Aktuators 7 gegen Umwelteinflüsse, wie Bewitterung und Steinschlag. Die geringe Baulänge vom Aktuator 7 mit geringem Überstand Ü (durch die Parallelität der Achsen A1, A2), und eine wenn auch limitierte Flexibilität vom Betätigungselement 9 ermöglichen grundsätzlich eine frei adaptierbare Platzierung an der Ankerplatte 2.

Der Antriebs- und Getriebestrang verfügt in diesem Zusammenhang über ein mehrstufiges, insbesondere 2-stufiges Zahnrad- und/oder Riemen- und/oder Schneckengetriebe und/oder Planetengetriebe (Mischkombinationen vorgenannter Typen sind möglich und erwünscht) als Momentenwandler vom Untersetzungstyp. Der Aktuator 7 schließt eine Rot-Trans-Wandlung anhand von einer integrierten Spindel-Mutteranordnung 15 ein. Im Getriebestrang ermöglicht ein vorzugsweise zweistufiges Rädergetriebe ein Untersetzungsverhältnis in einem Bereich zwischen etwa 7:1 bis 25:1. Wenn die nachgeschaltete Spreizeinrichtung 10 zwischen den Bremsschuhen 3,4 eine Untersetzung von etwa 4-6:1 ermöglicht, wird insgesamt ein Untersetzungsverhältnis von etwa 125:1 erzielt. Hinzu tritt eine zusätzliche Untersetzungswirkung von dem Rot-Trans-Wandler, was eine weiter erhöhte Gesamtuntersetzungswirkung über den gesamten Antriebsstrang ermöglicht. Durch diesen mehrstufigen Getriebestrang sind die Kosten- und Leistungsanforderungen an den elektrischen Motor 14 deutlich abgesenkt.

Die Aktuatorkonstruktion ist aus Fig. 7 in einem Querschnitt ersichtlich. Der Aktuator 7 ist dabei als gesondert handhabbare Baueinheit auf der Rückseite 6 der Ankerplatte 2 starr befestigt. Der Rot-Trans-Wandler ist als Spindel-Mutteranordnung 15 in das Getriebegehäuse 13 integriert. Dazu ist die Spindel in dem Getriebegehäuse 13 verdrehsicher, leichtgängig sowie translatorisch bewegbar, spielfrei geführt.

Wie auch aus Fig. 7 hervorgeht, ist das Getriebegehäuse 13 mehrstückig aufgebaut. Das Getriebegehäuse 13 nimmt die Vielzahl der Getriebebauelementen auf, die primär zur Drehmomentwandlung (geringes Eingangsdrehmoment, hohes Ausgangsdrehmoment) dienen, und auch eine stromlose Feststellbremsfunktion mittels Selbsthemmung ermöglichen können. Achsen A1, A2 von Motor- und Getriebewellen sind parallel, in dem Abstand X versetzt, zueinander vorgesehen. Zumindest bestimmte Getriebebauelemente können zumindest teilweise kostengünstigen Kunststoffwerkstoff aufweisen. Bevorzugt ist stromlose Selbsthemmung in dem Rot-Trans-Wandler (Spindelanordnung 15) vorgesehen, so dass der motorseitige Rest vom Antriebsstrang prinzipiell von den Zuspannkräften weitestgehend entlastet ist.

Für diejenigen Applikationen mit einer besonders effektiven, reibungsreduzierten, elektromechanischen Bremsfunktion befinden sich zwischen einer prinzipiell metallisch ausgebildeten Antriebsmutter und einer prinzipiell metallisch ausgebildeten Spindel mehrere nicht gezeichnete Wälzkörper. Eine Parkbremsfunktion wird bei den "stromlos gelösten" Varianten durch eine gesonderte Feststell-, Verriegelungs- oder Blockiervorrichtung ermöglicht. Eine besonders vorteilhafte Vorrichtung ist beispielsweise aus der DE 19826785 A1 bekannt, deren Offenbarungsgehalt in Hinblick auf die Prinzipien dieser Feststellvorrichtung in vollem Umfang hier mit einbezogen wird.

Der Kraftfluss der Bremsbetätigungskraft ist folgendermaßen. Ausgehend von Bremsschuh 3, 4 und Betätigungselement 9 gelangt die Zuspannkraft über die Spindel-Mutteranordnung 15 in deren Antriebsmutter. Die Antriebsmutter ist über ein Lager 16 drehbar im Getriebegehäuse 13 angeordnet sowie axial fest an der Rückseite 6 der Ankerplatte 2 abgestützt.

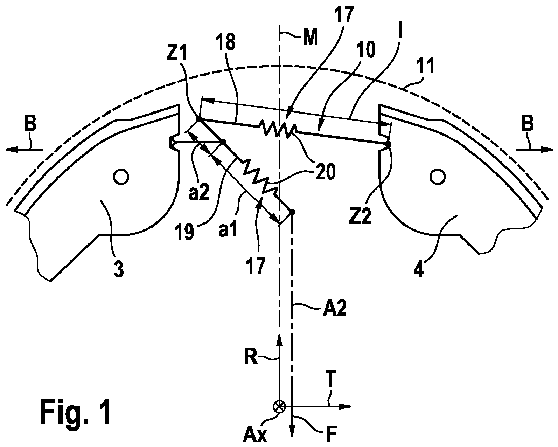

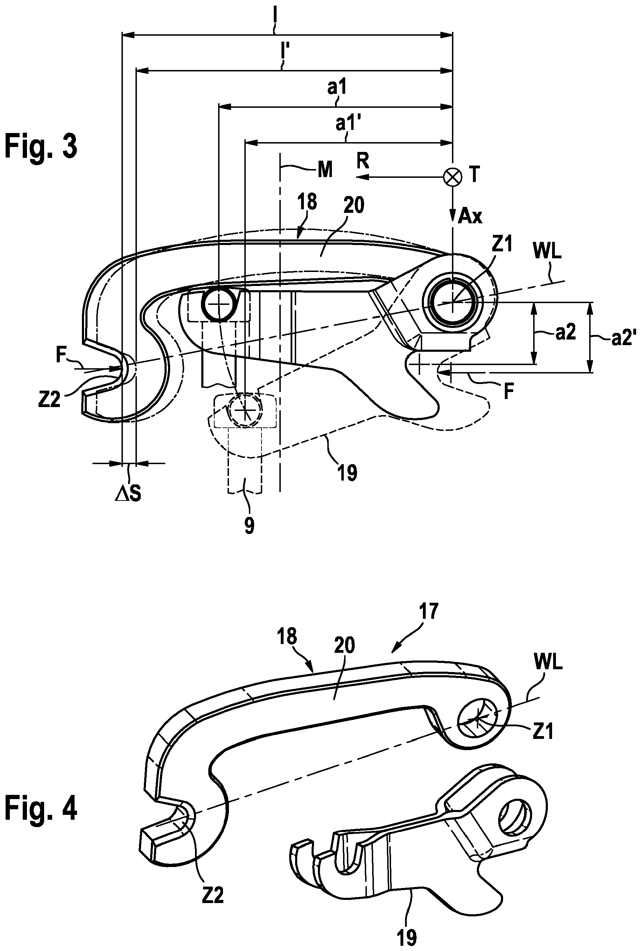

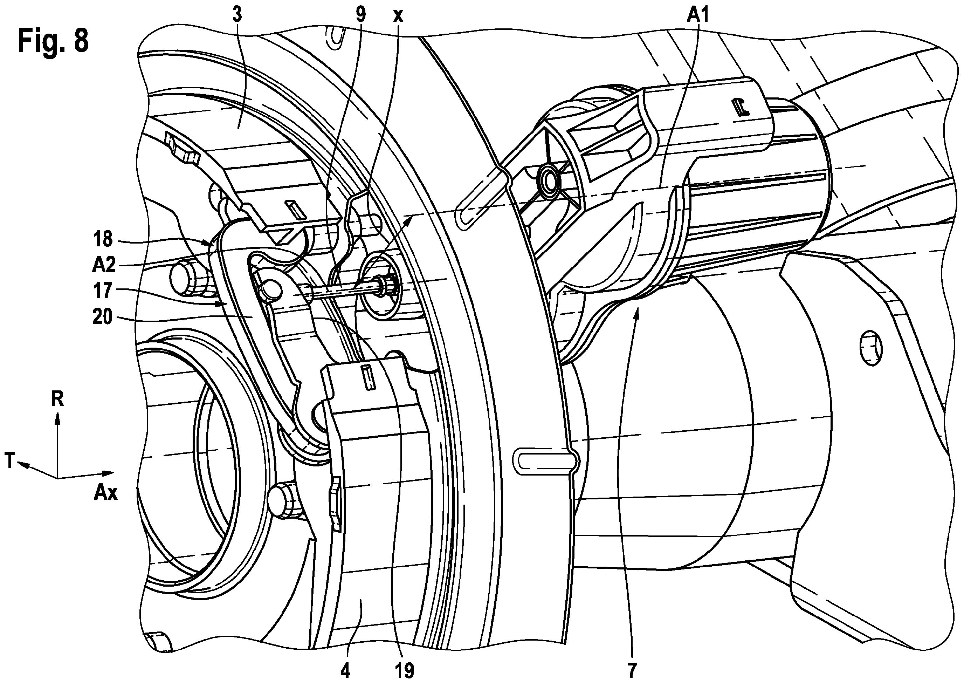

Ausgehend von diesem grundsätzlichen Aufbau wird nachstehend auf die Einzelheiten der neuartigen Hebel-Spreizeinrichtung 10 nach den Figuren 1, 3-8 eingegangen. Die Fig. 3 verdeutlicht Einzelheiten der erfindungsgemäßen Spreizeinrichtung im gelösten Zustand und wobei ein Betätigungszustand strichpunktiert verdeutlicht ist. Die Hebel-Spreizeinrichtung 10 ist im Inneren der Bremstrommel 11 auf der Innenseite 5 der Ankerplatte 2 angeordnet und wird über das Betätigungselement 9 translatorisch betätigt. Das Übersetzungsverhältnis i ist geometrisch im Wesentlichen durch die Hebelverhältnisse a1/a2 am Betätigungshebel 19 definiert. Dabei verringert sich dessen Übersetzungseffekt, weil sich mit fortschreitender Betätigung die wirksame Länge von dem Hebelarm a1 sukzessive verkürzt während die wirksame Länge von dem Hebelarm a2 sukzessive anwächst. Die Spreizeinrichtung 10 untersetzt sowie verteilt dadurch die vom Betätigungselement 9 eingeleitete Translationsbewegung gleichmäßig und dennoch mit Dynamik auf die beiden Bremsschuhe 3,4. Umgekehrt übersetzt die Spreizeinrichtung 10 die eingeleiteten Kräfte mit dem genannten Getriebewirkungsgrad i. Der Aktuator 7 wird so bestromt, dass die Bremsschuhe 3,4 mit definierter Spannkraft an die Bremstrommel 11 angelegt werden. An diesen Anlegevorgang schließt sich in Abhängigkeit von der Fahrzeugneigung ein automatischer Eindrehvorgang mit dem drehrichtungsunabhängig erfolgenden Servoeffekt statt, der das Fahrzeug sichert. Weil thermische Schrumpfung einer heiß abgestellten und zwischenzeitlich erkalteten Trommelbremsanlage einen Zerstörungsschutz erfordert, verfügt die Hebel-Spreizeinrichtung 10 über ein integriertes, definiert elastisches, also reversibel spannbares Federmittel 17 (Federspeicher) mit einer Mindestelastizität von ΔS = mind. 1 mm). Diese Elastizität bewirkt gleichzeitig ein Zuspannkraftreservoir als auch eine Kompensation von Bremstrommelschrumpfprozessen. Für bauraumsparende Bauweise ist dazu wenigstens ein Bauteil der Hebel-Spreizeinrichtung 10 mit einer Doppelfunktion als quasifederelastisches Hebel-Getriebebauteil versehen. Wie aus der Figur hervorgeht, verfügt die Hebel-Spreizeinrichtung 10 über zumindest eine Federbrücke 18 und wenigstens einen Betätigungshebel 19, welcher gelenkig an der Federbrücke 18 angelenkt ist, und seinerseits mit dem Betätigungselement 9 der Aktuatorik 7 verbunden ist. Dabei ist die Schwenkachse der Hebel der Spreizeinrichtung 10 radial gerichtet sowie parallel zur Mittelachse M der Trommelbremse angeordnet.

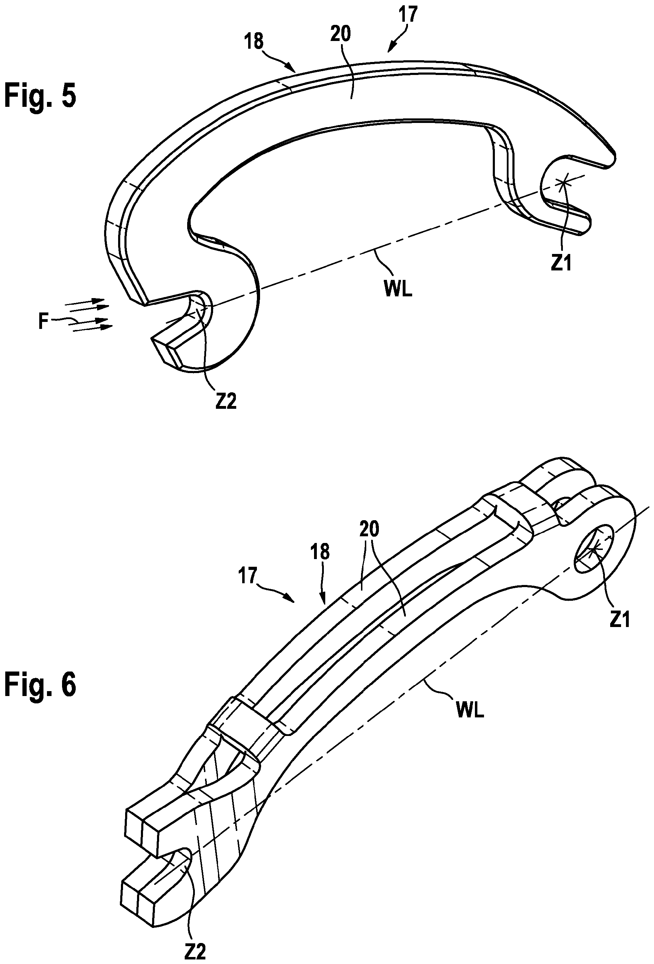

Bei der bevorzugten Ausführungsform ist ein Schenkel von dem Hebelbauteil Federbrücke 18 wie ersichtlich als Bügel- oder Biegefeder im weitesten Sinne bogenförmig nach den Prinzipien eines Eulerschen-Biege-Knickstabs ausgebildet, um die gewünschte Federwirkung zu erhalten. Dabei ist die Federbrücke 18 durch die Bremszuspannkräfte in deren Hook'schen Bereich auf Knickung beaufschlagt und wird entsprechend elastisch deformiert (vgl. Fig. 5) . Die Kennlinie vom Federmittel 17 ist unmittelbar abhängig von dem Biegewiderstandsmoment also abhängig von dem ausgeführten Biegewiderstandsprofil vom Federschenkel 20. Demzufolge wird bevorzugt die Formgebung und die Querschnittsgeometrie vom Federschenkel 20 der Federbrücke 18 herangezogen, um deren Federeigenschaften zu verändern. Eine weitere Einflussgröße bezieht sich auf den Elastizitätsmodul vom verwendeten Werkstoff des Federschenkels 20. Bevorzugt ist dazu zumindest die besagte Federbrücke 18 wie ein elastischer Biegebalken vollständig aus einem harten, federelastischen Stahlwerkstoff (Werkzeug- oder Federstahl) gefertigt. Dabei ist die Spreizeinrichtung 10 vorzugsweise zunächst umformtechnisch aus Blechwerkstoff gefertigt, dann mit der notwendigen Wärmebehandlung versehen und schließlich montiert. Alternativ kann ein verstärkter Verbundwerkstoff als integriertes Federmittel 17 Verwendung finden, indem der gesamte Hebel aus dem Verbundwerkstoff ausgebildet wird. Es versteht sich dass an Stelle, oder auch ergänzend zu, der Federbrücke 18 auch der Betätigungshebel 19 als elastische Feder ausgebildet sein kann, ohne die Erfindung zu verlassen. Ebenso ist es denkbar, dass andere Federprinzipien in der Spreizvorrichtung 10 Anwendung finden können, wie beispielsweise das Schenkel- und/oder Torsionsfederprinzip. Es ist möglich, einen Drahtfederbügel zu verwenden.

Eine modulare Fertigung wird unterstützt, indem die Hebel-Spreizeinrichtung (Spreizschloss) 10 als gesondert handhabbare Baugruppe (Spreizeinrichtungs-Modul) ausgebildet ist, welche die Schwenkachsen einschließlich Federbrücke 18 und Betätigungshebel 19 umfasst.

Wie die Figuren zeigen, erstreckt sich der Federschenkel 20 der Federbrücke 18 im Wesentlichen seitlich neben einer Kraftwirkungslinie WL welche die Zentren Z1, Z2 der endseitigen Kraftangriffspunkte auf kürzester Linie miteinander verbindet.

Die hebelintegrierte Bauweise von dem Federmittel 17 beansprucht infolge Doppelfunktion von der Federbrücke 18 vorteilhafterweise keine zusätzlichen, gesonderten Bauelemente, Einbauraum, Vorspannelemente oder ähnliches. Die Erfindung ist daher insbesondere mit folgenden Vorteilen verknüpft: Die gewünschte Elastizität wird besonders kostengünstig ohne besondere Bremsschuhe 3,4 und auch ohne besondere zusätzliche Speicherbauteile bauraumsparend, ermöglicht. Gleichzeitig wird das gewünschte elastische Spannkraftreservoir geschaffen. Diese integrale Elastizität eliminiert die Gefahr, dass nach Heißabstellen und Abkühlen einer Duo-Servo-Trommelbremse eine Zerstörung oder unlösbare Verriegelung eintritt. Dabei garantiert das elastische Arbeitsvermögen (Spannkraftreservoir) vom erfindungsgemäßen Spreizschloss selbst nach einem Setzvorgang involvierter Bremsenbauteile auf stromlosem Wege sowie Bauraumneutral eine gesetzlich geforderte Mindestzuspannkraft. Es versteht sich, dass die erfindungsgemäße Spreizeinrichtung nicht ausschließlich für die Trommelbremsen vom Typ Duo-Servo eingesetzt werden kann.

Erfindungsgemäß ermöglicht die erfindungsgemäß elastische Spreizeinrichtung 10 eine systematische Kombination mit einem besonders stabilen, weitgehend steifen also unelastisch ausgelegten, elektrischen Radbremsaktuator.

Erfindungsgemäß ist eine Hebel-Spreizvorrichtung/Spreizschloss 10 mit integrierter Eigenelastizität in intelligenter Form versehen, indem eine gewünschte Kraft-/Weg-Federkennlinie integral in einen Getriebehebel integriert vorgehalten ist. Also ermöglicht die neuartige Spreizeinrichtung 10, die primär zwei Hebel, einen Lagerbock und eine oder mehrere Achsen sowie ggf. weitere im Kraftfluss angrenzende Bauteile umfasst - gleichzeitig die gewünschte (Speicher-)Federeigenschaft. Demgegenüber sind die angrenzenden Komponenten weitgehend starr ausgebildet.

Indem in einer Ausführungsform einer erfindungsgemäßen Spreizeinrichtung 10 die Ankopplung vom Betätigungselement 9 symmetrisch zwischen den Aufnahmen der Bremsschuhe 3,4 platziert ist, wird es ermöglicht, die Spreizeinrichtung 10 ohne Richtungsvorgabe zu montieren. Mit anderen Worten erfüllt das Trommelbremsmodul dadurch die Vorgabe, dass der Aktuator 7 zentrisch zwischen den Aufnahmen für die Bremsschuhe 3,4 platziert angeordnet ist.

In Sachen Fertigung der Spreizeinrichtung 10 wird primär vorgeschlagen, dass die Federbrücke 18 der Spreizeinrichtung 10 aus einem Federstahl feingestanzt wird. Im Übrigen können auch steife Teile der Spreizvorrichtung 10 gebildet werden indem mehrere Stahlbleche quasi mehrlagig miteinander verbunden werden (vgl. geschweißter Betätigungshebel 19 in Fig. 4). Alternativ kann die Federbrücke 18 oder der Betätigungshebel 19 als geformtes/geprägtes Blechformteil ausgebildet sein.

Nochmals die Vorteile der ersten Lösung:
- Kraftspeichernde federelastische Spreizeinrichtung 10
- Einfache modulare Montage der Komponenten
- Bauraumneutral, Federeigenschaft ohne zusätzlich benötigten Einbauraum
- schwimmende Lagerung, Integration ohne Veränderung bewährter Komponenten der Simplex-/Duo- Servo-Bremse
- Aufgespreizter Betätigungshub und dadurch präzisere Steuerung und Regelung vom Aktuator 7
- Symmetrisch-mittige Anbindung zwischen Spreizvorrichtung 10 und Betätigungselement 9 vom Aktuator 7 möglich - Verlängerung vom Betätigungshebel 19 ist möglich
- Radbremse punktsymmetrisch ausbildbar, auch hinsichtlich der Bremsschuhe 3,4 - dies ermöglicht eine Gleichteilestrategie für die Bremsschuhe 3,4
- Weitgehend hysteresefreie Federfunktion durch unmittelbare Anwendung vom Hook'schen Gesetz - der Elastizitätsmodul ist wartungsfrei und konstruktiv werkstoffabhängig vorgebbar - daher keine Schmierstoffabhängigkeiten wie bei Tellerfedern

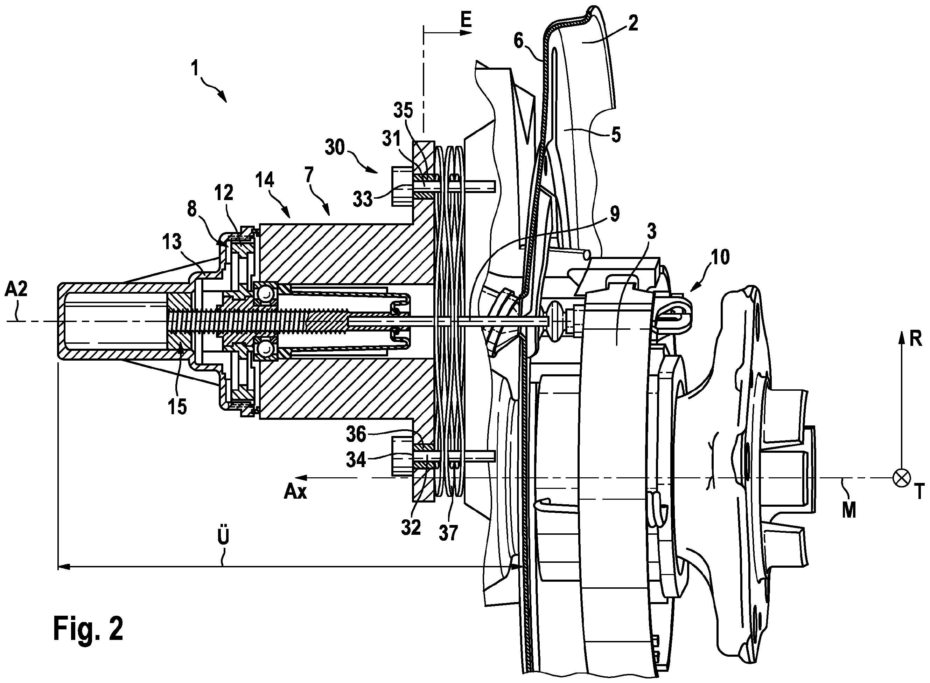

Nachstehend wird auf die nebengeordnete Lösung nach Fig. 2 eingegangen. Dabei ist der Aktuator 7 - mit Ausnahme von seiner Halterung an der Ankerplatte 2 - prinzipiell wie in Fig. 7 ausgebildet. Daher werden nachstehend nur die prinzipiellen Unterschiede beschrieben, während übereinstimmende Merkmale in der Fig. 2 mit übereinstimmenden Bezugsziffern versehen sind.

Der Aktuator 7 ist in Relation zu der Rückseite 6 der Ankerplatte 2 parallel dazu begrenzt verschiebbar geführt sowie elastisch vorgespannt also nachgiebig an der Ankerplatte 2 angeordnet. Die Parallelführung 30 kann durch wenigstens zwei Führungsbolzen 31,32 mit übereinstimmenden Anschlägen 33,34 gebildet sein, wobei ein Außendurchmesser der Führungsbolzen 31,32 in Führungsbuchsen 35,36 verschiebbar aufgenommen sind oder umgekehrt. Prinzipiell sind die Führungsbolzen 31,32 fest an der Ankerplatte 2 angeordnet und der Aktuator 7, respektive dessen Gehäuse nimmt die geführten Buchsen 35,36 auf. Alternativ können die Führungsbolzen 31,32 fest am Aktuator 7 angeordnet sein, während die Führungsbuchsen 35,36 fest an der Ankerplatte 2 angeordnet sind. Wichtig ist strenge Parallelität und Reibungsfreiheit in dieser Parallelführung sowie identisch gleich bemessene und platzierte Anschläge 33,34 damit der maximalen Verschiebungsweg vom Aktuator 7 gleichmäßig begrenzt ist und Verkanten in der Führung vermieden wird. Die Anschläge 33,34 können beispielsweise insbesondere durch Nocken oder Schraubenköpfe ausgebildet sein. Zwischen Aktuator 7 und Ankerplatte 2 ist weiterhin mindestens ein Federmittel 37 elastisch vorgespannt angeordnet. Beispielsweise handelt es sich bei diesem Federmittel 37 um eine scheibenförmige Wellfeder welche eine besonders steife Kraft-Weg-Charakteristik aufweist. Zwecks Kennlinienvariation ist es möglich, mehrere Federmittel 37 zueinander in Serie oder Parallel zu schalten, um die gewünschte Federkennlinie für unterschiedliche Fahrzeug- oder Bremsenapplikationen einzustellen. Es kann vorgesehen sein, dass mehrere Wellfedern mit übereinstimmend-gleicher oder mit zueinander unterschiedlicher Federkennlinie Verwendung finden, um die gebildete Gesamtfederkennlinie an den gewünschten Anwendungsfall zu adaptieren. In Abhängigkeit von der Ausbildung der einzelnen Federmittel 37 und deren Schichtungsmethodik können in diesem Zusammenhang progressive oder degressive Kennlinienteile erzeugt werden. Es versteht sich, daß im Systemverbund zusätzlich eine konventionelle oder vorteilhaft eine erfindungsgemäße Spreizeinrichtung 10 (vgl. erste Problemlösung) vorgesehen sein kann.

Die Funktion des Systems ist so, dass in einen Kraftfluss der Zuspannkräfte zwischen Ankerplatte 2 und Aktuator 7 ein oder mehrere elastisch vorgespannte Federmittel 37 (vorzugsweise Wellfedern) eingebunden sind. Die Elastizität dieser Federmittel 37 ist so bemessen, dass für ein Heißabstellen des Fahrzeugs ausreichend Wegreserve zur Kompensation einer thermischen Schrumpfung einer Bremstrommel 11 vorgehalten wird. Mit anderen Worten führt eine thermische Schrumpfung einer Bremstrommel 11 im feststellgebremsten Zustand dazu, dass der Aktuator 7 in Pfeilrichtung E elastisch in Richtung auf die Rückseite 6 der Ankerplatte 2 zu beaufschlagt wird.

Die derart federnd elastische Anbindung des Aktuators 7 wirkt sich weiterhin vorteilhaft bei der Vermeidung von Geräuschemission im Bremsbetrieb aus. Das Parallelführungssystem ist vorzugsweise abgedichtet, so dass Verunreinigungen nicht eindringen oder in Zwischenräume gelangen können. Aus Synergiegründen können die Bolzen-Führungssysteme Verwendung finden, wie sie bei den Faustsattelscheibenbremsen zwecks Parallelführung zwischen Halter und Faustsattel angewendet werden. Eine wichtige Anforderung an sämtliche Komponenten wie insbesondere das Federmittel 37 ist dessen dauerfeste Auslegung, so dass es unter Last nicht zu fließen oder zu kriechen beginnt, also seine Federkennlinie nicht einfach abändert. Dies wird vorteilhaft sichergestellt, indem eine metallische Wellfeder Verwendung findet. Die Wellfeder ist mit geringem Aufwand durch ihre geometrische Dimensionierung, durch die Wickelungsart sowie durch die Werkstoffwahl an den gewünschten Anwendungsfall adaptierbar.

Wie gezeigt wurde, basieren beide erfindungsgemäße Lösungen auf Federmitteln 17,37 um die Anwendungsbesonderheiten und Lastfälle einer besonders leistungsfähigen und elektromechanisch betätigbaren Duo-Servo-Trommelbremse günstig - ohne zusätzliche Elektronik oder Sensorik - zu kompensieren.
- 1: Trommelbremsmodul
- 2: Ankerplatte
- 3: Bremsschuh
- 4: Bremsschuh
- 5: Innenseite
- 6: Rückseite
- 7: Aktuator
- 8: Getriebe
- 9: Betätigungselement
- 10: Spreizeinrichtung
- 11: Bremstrommel
- 12: Getriebe
- 13: Getriebegehäuse
- 14: Motor
- 15: Spindel-Mutteranordnung
- 16: Lager
- 17: Federmittel
- 18: Federbrücke
- 19: Betätigungshebel
- 20: Federschenkel
- 30: Parallelführung
- 31: Führungsbolzen
- 32: Führungsbolzen
- 33: Anschlag
- 34: Anschlag
- 35: Führungsbuchse
- 36: Führungsbuchse
- 37: Federmittel

- Ax: Axialrichtung (Raddrehachse)
- a1,a1': Hebelarm
- a2,a2': Hebelarm
- B: Spreizbewegung
- ΔS: Elastizität (mind. 1 mm)
- E: Pfeilrichtung
- F: Kraft
- H: Hub
- i: Übersetzungsverhältnis
- l: Länge (Federbrücke-unbelastet) / l = 1'+ ΔS
- M: Mittelachse
- R: Radialrichtung
- T: Tangentialrichtung
- WL: Wirkungslinie
- Z1, Z2: Zentrum

## Patentansprüche

1. Elektromotorisch betreibbares Trommelbremsmodul (1) für Kraftfahrzeuge, wobei eine Spreizeinrichtung (10) schwimmend sowie etwa zentrisch zwischen zwei Bremsschuhen (3,4) angeordnet ist,
wobei die Spreizeinrichtung (10) mindestens zwei gelenkig miteinander verbundene und jeweils an einem Bremsschuh (3,4) abgestützte Getriebehebel umfasst,
wobei wenigstens einer der Getriebehebel der Spreizeinrichtung (10) mit einem Betätigungselement (9) eines Aktuators (7) gekoppelt ist, welcher gemeinsam mit einem Rot-Trans-Wandler an einer Rückseite (6) einer Ankerplatte (2) angeordnet ist,
wobei die Aktuatorik (7) dazu dient, dass die Bremsschuhe (3,4) eine gleichmässige, translatorisch gerichtete, sowie getrieblich übersetzte, Spreizbewegung (B) in Richtung Bremstrommel (11) ausführen,
**dadurch gekennzeichnet, dass** zumindest einer der Getriebehebel wenigstens ein elastisch reversibel durch die Bremszuspannkraft definiert verformbares Federmittel (17) integriert.

2. Elektromotorisch betreibbares Trommelbremsmodul (1) für Kraftfahrzeuge nach Anspruch 1, **dadurch gekennzeichnet, dass** das Federmittel (17) aus federelastischem Stahlwerkstoff ausgebildet ist.

3. Elektromotorisch betreibbares Trommelbremsmodul (1) für Kraftfahrzeuge nach Anspruch 1 oder 2, **dadurch gekennzeichnet, dass** das Federmittel (17) in einem linearen Bereich Ihrer Kraft-Weg-Kennlinie (Hooke'scher Bereich) beaufschlagt ist.

4. Elektromotorisch betreibbares Trommelbremsmodul (1) für Kraftfahrzeuge nach Anspruch 1-3, **dadurch gekennzeichnet, dass** das Federmittel (17) als Federbrücke (18) mit einer Länge l ausgebildet ist, und an einem Ende eine Aufnahme zur Anlage an einem Teil von einem ersten Bremsschuh ( 3)aufweist, und dass an einem dieser Aufnahme gegenüber angeordneten Ende von der Federbrücke (18) ein Betätigungshebel (19) schwenkbar angelenkt ist, welcher einerseits einen ersten Hebelarm (a1) mit einer Schnittstelle zu dem Betätigungselement (9) vom Aktuator (7) aufweist, und andererseits einen zweiten Hebelarm (a2) mit einer Aufnahme für einen Teil von einem Bremsschuh (3,4) aufweist.

5. Elektromotorisch betreibbares Trommelbremsmodul (1) für Kraftfahrzeuge nach Anspruch 4, **dadurch gekennzeichnet, dass** der zweite Hebelarm (a2) kürzer als der erste Hebelarm (a1) ausgebildet ist, und dass die beiden Hebelarme (a1,a2) kürzer als die Länge (l) der Federbrücke (18) dimensioniert sind.

6. Elektromotorisch betreibbares Trommelbremsmodul (1) für Kraftfahrzeuge nach einem oder mehreren der vorhergehenden Ansprüche, **dadurch gekennzeichnet, dass** die Hebel-Spreizeinrichtung (10) mit ihren Aufnahmen gehäuselos zwischen den Bremsschuhen (3,4) lose oder eingespannt sowie gelenkig gelagert angeordnet ist.

7. Elektromotorisch betreibbares Trommelbremsmodul (1) für Kraftfahrzeuge, nach Anspruch 4-6, **dadurch gekennzeichnet, dass** die Hebel-Spreizeinrichtung (10) als gesondert handhabbares Modul ausgebildet ist.

8. Elektromotorisch betreibbares Trommelbremsmodul (1) für Kraftfahrzeuge, nach Anspruch 4-7, **dadurch gekennzeichnet, dass** zwischen Gelenk und Aufnahme von der Federbrücke (18) eine lineare Kraftwirkungslinie (WL) verläuft wobei ein Querschnitt von der Federbrücke zumindest im Bereich von einem bogenförmig gekrümmten Federschenkel (20) im Wesentlichen vollständig im Abstand zu dieser Wirkungslinie (WL) angeordnet sowie mit einem definierten Biegewiderstandsmoment ausgestattet ist.

9. Elektromotorisch betreibbares Trommelbremsmodul (1) für Kraftfahrzeuge, nach einem oder mehreren der vorhergehenden Ansprüche, **dadurch gekennzeichnet, dass** die Ankopplung zwischen Betätigungselement (9) und Betätigungshebel (19) der Spreizeinrichtung (10) symmetrisch im Bereich der Mittelachse M zwischen Aufnahmen der Bremsschuhe 3,4 platziert ist.

10. Elektromotorisch betreibbares Trommelbremsmodul (1) für Kraftfahrzeuge, wobei eine Spreizeinrichtung (10) zwischen zwei Bremsschuhen (3,4) angeordnet ist,
wobei die Spreizeinrichtung (10) mit einem Betätigungselement (9) eines Aktuators (7) gekoppelt ist, welcher gemeinsam mit einem Rot-Trans-Wandler an einer Rückseite (6) einer Ankerplatte (2) angeordnet ist,
wobei die Aktuatorik (7) dazu dient, dass die Bremsschuhe (3,4) eine gleichmässige, translatorisch gerichtete, sowie getrieblich übersetzte, Spreizbewegung (B) in Richtung Bremstrommel (11) ausführen,
**dadurch gekennzeichnet, dass** der Aktuator (7) in Relation zu der Rückseite (6) der Ankerplatte (2) sowie parallel zu einer Axialrichtung Ax begrenzt verschiebbar geführt sowie elastisch vorgespannt nachgiebig an der Ankerplatte (2) gelagert ist.

11. Elektromotorisch betreibbares Trommelbremsmodul (1) für Kraftfahrzeuge nach Anspruch 10, **dadurch gekennzeichnet, dass** dem Aktuator () 7) eine Parallelführung (30) zugeordnet ist, die parallel zur Axialrichtung Ax platziert ist.

12. Elektromotorisch betreibbares Trommelbremsmodul (1) für Kraftfahrzeuge nach Anspruch 11, **dadurch gekennzeichnet, dass** die Parallelführung (30) wenigstens zwei ortsfeste Führungsbolzen (31,32) und wenigstens zwei verschiebbare Führungsbuchsen (35,36) zur Aufnahme der Führungsbolzen (31,32) aufweist, oder umgekehrt.

13. Elektromotorisch betreibbares Trommelbremsmodul (1) für Kraftfahrzeuge nach Anspruch 12, **dadurch gekennzeichnet, dass** den Führungsbolzen (31,32) übereinstimmend platzierte Anschläge (33,34) zur Begrenzung der Parallelverschiebung zugeordnet sind.

14. Elektromotorisch betreibbares Trommelbremsmodul (1) für Kraftfahrzeuge nach wenigstens einem der Ansprüche 10-13, **dadurch gekennzeichnet, dass** im Kraftfluss der Bremszuspannkraft zwischen Aktuator (7) und Ankerplatte (2) mindestens ein Federmittel (37) elastisch vorgespannt eingespannt ist.

15. Elektromotorisch betreibbares Trommelbremsmodul (1) für Kraftfahrzeuge nach wenigstens einem der Ansprüche 10-14, **dadurch gekennzeichnet, dass** mehrere mit identischer oder unterschiedlicher Federkennlinie versehene Federmittel (37) unter Serien- und/oder Parallelschaltung gestaffelt vorgesehen sind, um eine Federkennlinienanpassung zu ermöglichen.

16. Elektromotorisch betreibbares Trommelbremsmodul (1) für Kraftfahrzeuge nach Ansprüche 14 und/oder 15, **dadurch gekennzeichnet, dass** das Federmittel (37) als Wellfeder ausgebildet ist.

## Claims

1. Motor vehicle drum brake module (1) which can be operated by electric motor, wherein an expansion device (10) is arranged so as to float and so as to be approximately central between two brake shoes (3, 4), wherein the expansion device (10) comprises at least two mechanism levers articulated to each other and each supported on a brake shoe (3, 4),
wherein at least one of the mechanism levers of the expansion device (10) is coupled to an actuating element (9) of an actuator (7), which is arranged together with a rotation-translation converter on a rear side (6) of an anchor plate (2),
wherein the actuator system (7) serves to ensure that the brake shoes (3, 4) carry out a uniform, translationally directed expansion movement (B), subject to a transmission ratio, in the direction of the brake drum (11),
**characterized in that** at least one of the mechanism levers has at least one integrated spring means (17), which can be elastically reversibly deformed in a defined manner by the brake application force.

2. Motor vehicle drum brake module (1) which can be operated by electric motor, according to Claim 1, **characterized in that** the spring means (17) is formed from spring-elastic steel material.

3. Motor vehicle drum brake module (1) which can be operated by electric motor, according to Claim 1 or 2, **characterized in that** the spring means (17) is stressed in a linear region of its force/displacement characteristic (Hooke's range).

4. Motor vehicle drum brake module (1) which can be operated by electric motor, according to Claims 1-3, **characterized in that** the spring means (17) is designed as a spring bridge (18) with a length 1 and, at one end, has a receptacle for resting on a part of a first brake shoe (3), and **in that** an actuating lever (19) is articulated pivotably to an opposite end of the spring bridge (18) from said receptacle, said lever having, on the one hand, a first lever arm (a1) with a point of intersection with the actuating element (9) of the actuator (7), and, on the other hand, having a second lever arm (a2) having a receptacle for a part of a brake shoe (3, 4).

5. Motor vehicle drum brake module (1) which can be operated by electric motor, according to Claim 4, **characterized in that** the second lever arm (a2) is made shorter than the first lever arm (a1), and **in that** the two lever arms (a1, a2) are dimensioned so as to be shorter than the length (1) of the spring bridge (18).

6. Motor vehicle drum brake module (1) which can be operated by electric motor, according to one or more of the preceding claims, **characterized in that** the lever-type expansion device (10) with its receptacles is arranged without a housing between the brake shoes (3, 4), being arranged loosely or in a clamped manner and so as to be mounted in an articulated manner.

7. Motor vehicle drum brake module (1) which can be operated by electric motor, according to Claims 4-6, **characterized in that** the lever-type expansion device (10) is designed as a module that can be handled separately.

8. Motor vehicle drum brake module (1) which can be operated by electric motor, according to Claims 4-7, **characterized in that** there is a linear line of action of force (WL) between the joint and the receptacle of the spring bridge (18), wherein, at least in the region of an arcuately curved spring limb (20), a cross section of the spring bridge is arranged substantially completely spaced apart from this line of action (WL) and is provided with a defined bending moment of resistance.

9. Motor vehicle drum brake module (1) which can be operated by electric motor, according to one or more of the preceding claims, **characterized in that** the coupling between the actuating element (9) and the actuating lever (19) of the expansion device (10) is positioned symmetrically in the region of the center axis M between receptacles of the brake shoes 3, 4.

10. Motor vehicle drum brake module (1) which can be operated by electric motor, wherein an expansion device (10) is arranged between two brake shoes (3, 4), wherein the expansion device (10) is coupled to an actuating element (9) of an actuator (7), which is arranged together with a rotation-translation converter on a rear side (6) of an anchor plate (2),
wherein the actuator system (7) serves to ensure that the brake shoes (3, 4) carry out a uniform, translationally directed expansion movement (B), subject to a transmission ratio, in the direction of the brake drum (11),
**characterized in that** the actuator (7) is guided so as to be movable to a limited extent in relation to the rear side (6) of the anchor plate (2) and parallel to an axial direction Ax and is mounted in an elastically preloaded deflectable manner on the anchor plate (2).

11. Motor vehicle drum brake module (1) which can be operated by electric motor, according to Claim 10, **characterized in that** the actuator (7) is assigned a parallel guide (30), which is positioned parallel to the axial direction Ax.

12. Motor vehicle drum brake module (1) which can be operated by electric motor, according to Claim 11, **characterized in that** the parallel guide (30) has at least two fixed-location guide pins (31, 32) and at least two movable guide bushes (35, 36) for receiving the guide pins (31, 32), or vice versa.

13. Motor vehicle drum brake module (1) which can be operated by electric motor, according to Claim 12, **characterized in that** the guide pins (31, 32) are assigned correspondingly positioned stops (33, 34) for limiting the parallel movement.

14. Motor vehicle drum brake module (1) which can be operated by electric motor, according to at least one of Claims 10-13, **characterized in that** at least one spring means (37) is clamped in an elastically preloaded manner in the force flow path of the brake application force between the actuator (7) and the anchor plate (2).

15. Motor vehicle drum brake module (1) which can be operated by electric motor, according to at least one of Claims 10-14, **characterized in that** a plurality of spring means (37) with an identical or different spring characteristic are provided in a staggered series and/or parallel arrangement in order to allow adaptation of the spring characteristic.

16. Motor vehicle drum brake module (1) which can be operated by electric motor, according to Claims 14 and/or 15, **characterized in that** the spring means (37) is designed as a wave spring.

## Revendications

1. Module de frein à tambour (1) pouvant fonctionner par un moteur électrique pour véhicules automobiles, un dispositif écarteur (10) étant monté de manière flottante et aussi approximativement centré entre deux sabots de frein (3, 4),
le dispositif écarteur (10) comportant au moins deux leviers d'engrenage reliés l'un à l'autre de manière articulée et prenant appui respectivement contre un sabot de frein (3, 4),
au moins l'un des leviers d'engrenage du dispositif écarteur (10) étant couplé à un élément d'actionnement (9) d'un actionneur (7), lequel est disposé conjointement avec un convertisseur rotation/translation au niveau d'un côté arrière (6) d'une plaque d'ancrage (2),
l'actionneur (7) servant à ce que les sabots de frein (3, 4) accomplissent un mouvement d'écartement (B) régulier, orienté en translation et démultiplié par engrenage en direction du tambour de frein (11), **caractérisé en ce que**
au moins l'un des leviers d'engrenage intègre au moins un moyen de ressort (17) réversible élastiquement et déformable de manière définie par la force d'application du frein.

2. Module de frein à tambour (1) pouvant fonctionner par un moteur électrique pour véhicules automobiles selon la revendication 1, **caractérisé en ce que** le moyen de ressort (17) est réalisé à partir d'un matériau à base d'acier à élasticité de ressort.

3. Module de frein à tambour (1) pouvant fonctionner par un moteur électrique pour véhicules automobiles selon la revendication 1 ou 2, **caractérisé en ce que** le moyen de ressort (17) peut être sollicité dans une zone linéaire de sa courbe caractéristique force/course (zone de Hooke) .

4. Module de frein à tambour (1) pouvant fonctionner par un moteur électrique pour véhicules automobiles selon les revendications 1 à 3, **caractérisé en ce que** le moyen de ressort (17) est réalisé sous la forme d'un cavalier ressort (18) ayant une longueur l, et possède à une extrémité un logement servant à l'appui contre une partie d'un premier sabot de frein (3), et **en ce qu'**un levier d'actionnement (19) est articulé avec pivotement à une extrémité du cavalier ressort (18) disposée à l'opposé de ce logement, lequel possède d'un côté un premier bras de levier (a1) pourvu d'une interface avec l'élément d'actionnement (9) de l'actionneur (7) et possède de l'autre côté un deuxième bras de levier (a2) pourvu d'un logement pour une partie d'un sabot de frein (3, 4).

5. Module de frein à tambour (1) pouvant fonctionner par un moteur électrique pour véhicules automobiles selon la revendication 4, **caractérisé en ce que** le deuxième bras de levier (a2) est configuré plus court que le premier bras de levier (a1), et **en ce que** les deux bras de levier (a1, a2) sont dimensionnés plus courts que la longueur (l) du cavalier ressort (18).

6. Module de frein à tambour (1) pouvant fonctionner par un moteur électrique pour véhicules automobiles selon une ou plusieurs des revendications précédentes, **caractérisé en ce que** le dispositif écarteur (10) à levier avec ses logements est disposé sans boîtier de manière lâche ou serrée entre les sabots de frein (3, 4) et aussi de façon à être monté de manière articulée.

7. Module de frein à tambour (1) pouvant fonctionner par un moteur électrique pour véhicules automobiles selon les revendications 4 à 6, **caractérisé en ce que** le dispositif écarteur (10) à levier est réalisé sous la forme d'un module pouvant être manipulé séparément.

8. Module de frein à tambour (1) pouvant fonctionner par un moteur électrique pour véhicules automobiles selon les revendications 4 à 7, **caractérisé en ce qu'**une courbe d'effet de force (WL) suit un tracé entre l'articulation et le logement du cavalier ressort (18), une section transversale du cavalier ressort, au moins dans une zone d'une branche de ressort (20) incurvée en forme d'arc étant disposée sensiblement entièrement à distance de cette courbe d'effet (WL) et aussi étant équipée d'un moment de résistance à la flexion défini.

9. Module de frein à tambour (1) pouvant fonctionner par un moteur électrique pour véhicules automobiles selon une ou plusieurs des revendications précédentes, **caractérisé en ce que** l'accouplement entre l'élément d'actionnement (9) et le levier d'actionnement (19) du dispositif écarteur (10) est placé de manière symétrique dans la zone de l'axe central M entre les logements des sabots de frein (3, 4).

10. Module de frein à tambour (1) pouvant fonctionner par un moteur électrique pour véhicules automobiles, un dispositif écarteur (10) étant disposé entre deux sabots de frein (3, 4),
le dispositif écarteur (10) étant couplé à un élément d'actionnement (9) d'un actionneur (7), lequel est disposé conjointement avec un convertisseur rotation/translation au niveau d'un côté arrière (6) d'une plaque d'ancrage (2),
l'actionneur (7) servant à ce que les sabots de frein (3, 4) accomplissent un mouvement d'écartement (B) régulier, orienté en translation et démultiplié par engrenage en direction du tambour de frein (11), **caractérisé en ce que** l'actionneur (7) est guidé de manière coulissante en relation avec le côté arrière (6) de la plaque d'ancrage (2) et aussi parallèlement à une direction axiale Ax ainsi que monté avec précontrainte élastique et de manière déformable sur la plaque d'ancrage (2).

11. Module de frein à tambour (1) pouvant fonctionner par un moteur électrique pour véhicules automobiles selon la revendication 10, **caractérisé en ce qu'**un guide parallèle (30) est associé à l'actionneur (7), lequel est placé parallèlement à la direction axiale Ax.

12. Module de frein à tambour (1) pouvant fonctionner par un moteur électrique pour véhicules automobiles selon la revendication 11, **caractérisé en ce que** le guide parallèle (30) possède au moins deux goujons de guidage (31, 32) fixes et au moins deux douilles de guidage (35, 36) coulissantes destinées à recevoir les goujons de guidage (31, 32), ou inversement.

13. Module de frein à tambour (1) pouvant fonctionner par un moteur électrique pour véhicules automobiles selon la revendication 12, **caractérisé en ce que** des butées (33, 34) placées en coïncidence avec les goujons de guidage (31, 32) sont associées à ceux-ci pour limiter le déplacement parallèle.

14. Module de frein à tambour (1) pouvant fonctionner par un moteur électrique pour véhicules automobiles selon au moins l'une des revendications 10 à 13, **caractérisé en ce qu'**au moins un moyen de ressort (37) est serré avec précontrainte élastique dans le flux de force de la force d'application du frein entre l'actionneur (7) et la plaque d'ancrage (2).

15. Module de frein à tambour (1) pouvant fonctionner par un moteur électrique pour véhicules automobiles selon au moins l'une des revendications 10 à 14, **caractérisé en ce que** plusieurs moyens de ressort (37) pourvus d'une courbe caractéristique de ressort identique ou différente sont présents échelonnés selon un circuit série et/ou parallèle afin de rendre possible une adaptation de courbe caractéristique de ressort.

16. Module de frein à tambour (1) pouvant fonctionner par un moteur électrique pour véhicules automobiles selon les revendications 14 et/ou 15, **caractérisé en ce que** le moyen de ressort (37) est réalisé sous la forme d'une rondelle ondulée.
